# EUROPÄISCHE PATENTANMELDUNG

(11) **EP 4 755 842 A1**
(43) Veröffentlichungstag der Anmeldung: **10.06.2026**
(21) Anmeldenummer: 24216987.8
(22) Anmeldetag: 03.12.2024
(51) Int. Cl.: B67D 7/34, G01F 13/00

(54) **DOSIERVORRICHTUNG ZUM DOSIEREN VON FLÜSSIGEN PROZESSCHEMIKALIEN**

(71) Anmelder: Chemische Fabrik Dr. Weigert GmbH & Co. KG, 20539 Hamburg (DE)
(72) Erfinder: PREUGSCHAS, Michael, 20539 Hamburg (DE); HOCH, Detlev, 20539 Hamburg (DE)
(74) Vertreter: Glawe, Delfs, Moll

(57) **Zusammenfassung**

Gegenstand der Erfindung ist eine Dosiervorrichtung zum Dosieren von wenigstens zwei flüssigen Prozesschemikalien aus wenigstens zwei wechselbaren Entnahmebehältern (2), mit einer Positionierungseinrichtung (3) für jeden Entnahmebehälter (2), mittels der der Entnahmebehälter (2) eine Entnahmeposition in der Dosiervorrichtung einnimmt, und je einer jedem Entnahmebehälter zugeordneten Sauglanze (4) zur Entnahme von flüssigen Prozesschemikalien.

Erfindungsgemäß ist vorgesehen, dass jede Sauglanze (4) mechanisch automatisiert von einer Behälterwechselposition in eine Flüssigkeitsentnahmeposition und umgekehrt verfahrbar ist, und dass das Verfahren von der Behälterwechselposition in die Flüssigkeitsentnahmeposition nur freigegeben ist, wenn ein zugeordneter Entnahmebehälter (2) in der Dosiervorrichtung die Entnahmeposition einnimmt.

## Beschreibung

Die Erfindung betrifft eine Dosiervorrichtung zum Dosieren von wenigstens zwei flüssigen Prozesschemikalien aus wenigstens zwei wechselbaren Entnahmebehältern, mit einer Positionierungseinrichtung für jeden Entnahmebehälter, mittels der der Entnahmebehälter eine Entnahmeposition in der Dosiervorrichtung einnimmt, und mit je einer jedem Entnahmebehälter zugeordneten Sauglanze zur Entnahme von flüssigen Prozesschemikalien.

Bei der maschinellen Aufbereitung (Reinigung, Desinfektion) von medizinischen und chirurgischen Instrumenten und Apparaten werden üblicherweise mehrere unterschiedliche Prozesschemikalien verwendet, die im Zuge der Reinigung bzw. Desinfektion in den Tank eines RDG (Reinigungs- und Desinfektionsgeräts) eindosiert werden. Die flüssigen Prozesschemikalien werden in Dosiervorrichtungen bzw. Dosierzentralen mittels Sauglanzen aus wechselbaren Entnahmebehältern entnommen und ihrer Nutzung zugeführt.

Entsprechende Dosiervorrichtungen werden in anderen Anwendungsbereichen wie beispielsweise der gewerblichen Geschirrreinigung oder der CIP-Reinigung im Bereich der Produktion von Lebensmittel oder Pharmazeutika oder im Molkereibereich eingesetzt.

Der Erfindung liegt die Aufgabe zugrunde, die Betriebssicherheit und/oder die Effizienz von Dosiervorrichtungen zum Dosieren von flüssigen Prozesschemikalien aus wechselbaren Entnahmebehältern zu erhöhen.

Ausgehend vom genannten Stand der Technik wird die Aufgabe gelöst mit den Merkmalen des Anspruchs 1. Vorteilhafte Ausführungen sind in den Unteransprüchen gegeben.

Zunächst werden einige im Rahmen der Erfindung verwendete Begriffe erläutert.

Die Dosiervorrichtung dient der Entnahme und Dosierung von flüssigen Prozesschemikalien aus Entnahmebehältern und der Zuführung zu einem Nutzprozess, z.B. einem Reinigungsprozess. Die Entnahmebehälter enthalten zum Verbrauch vorgesehene flüssige Prozesschemikalien für den vorgesehenen Prozess und sind wechselbar. Bei den Entnahmebehältern handelt es sich üblicherweise um Kanister oder Fässer mit einer Füllmenge von typischerweise 5-200 l. Bevorzugt handelt es sich um leicht handhabbare Kanister mit einer Füllmenge von 5-20 l.

Der Begriff flüssige Prozesschemikalien umfasst im Rahmen der Erfindung alle Flüssigkeiten, die in einem Prozess wie bspw. einer Reinigung oder Desinfektion eine entsprechende Wirkung entfalten, insbesondere somit Flüssigkeiten enthaltend Reinigungs- und/oder Desinfektionswirkstoffe, vorzugsweise in einer Konzentration höher als die vorgesehene Anwendungskonzentration, so dass vor der Anwendung eine Verdünnung mit einem Lösungsmittel, vorzugsweise Wasser, erfolgt.

Die Dosiervorrichtung weist Positionierungseinrichtungen für jeden Entnahmebehälter auf, die jedem Behälter eine definierte Entnahmeposition zuweisen, in der flüssige Prozesschemikalie aus dem Entnahmebehälter entnommen wird. Der Begriff Positionierungseinrichtung ist weit zu verstehen und umfasst jede Einrichtung, die einem Entnahmebehälter einen Stellplatz bzw. eine Stellfläche zuweist und vorzugsweise mechanische Positionierungshilfen wie beispielsweise einen teilweisen Formschluss um den Behälter bei Einnahme der Entnahmestellung aufweist. Die Positionierungseinrichtung kann relativ zur Dosiervorrichtung bewegliche Elemente aufweisen, beispielsweise einen unten noch näher erläuterten Schubteil.

Jedem Entnahmebehälter ist je eine Sauglanze zugeordnet. Zuordnung im Sinne der Erfindung bedeutet, dass jede Sauglanze einer bestimmten Entnahmeposition und damit einem in dieser Entnahmeposition befindlichen Entnahmebehälter zugeordnet ist und sich nicht oder allenfalls erschwert in einen in einer anderen Entnahmeposition befindlichen Entnahmebehälter einführen lässt. Diese Zuordnung trägt somit dazu bei, Verwechslungen durch Bedienungsfehler zu vermeiden oder weniger wahrscheinlich zu machen.

Sauglanzen sind bekannte Geräte zur Entnahme von flüssigen Prozesschemikalien aus Entnahmebehältern. Sie weisen typischerweise ein lanzenförmiges Rohr mit einer Ansaugöffnung sowie eine Anschlussmöglichkeit auf.

Erfindungsgemäß ist vorgesehen, dass jede Sauglanze mechanisch automatisiert von einer Behälterwechselposition in eine Flüssigkeitsentnahmeposition und umgekehrt verfahrbar ist. In der Behälterwechselposition kann der entsprechende Entnahmebehälter entnommen und gewechselt werden. Typischerweise ist die Sauglanze in dieser Position oberhalb des Behälters angeordnet. In der Flüssigkeitsentnahmeposition ist die Sauglanze dergestalt innerhalb des Behälters angeordnet, dass Flüssigkeitsentnahme stattfinden kann. Typischerweise liegt dabei der Fußpunkt der Lanze bei oder im Bereich des tiefsten Punktes des Behälters. Mechanisch bedeutet, dass das Verfahren ohne unmittelbaren manuellen Eingriff erfolgt, insbesondere kann das Verfahren durch Zufuhr von Fremdenergie und/oder das Eigengewicht der Sauglanze erfolgen. Automatisiert bedeutet, dass der Verfahrvorgang, einmal angestoßen, automatisch und ohne manuellen Eingriff bis in die jeweilige Endposition erfolgt. Das Anstoßen des Vorgangs kann manuell erfolgen, ist jedoch bevorzugt ebenfalls automatisiert und kann programmgesteuert ausgelöst werden, wie unten noch näher beschrieben.

Erfindungsgemäß ist das Verfahren von der Behälterwechselposition in die Flüssigkeitsentnahmeposition nur freigegeben, wenn ein zugeordneter Entnahmebehälter in der Dosiervorrichtung die Entnahmeposition einnimmt. Dies bedeutet, dass im Zuge eines Behälterwechsels, bei der sich die Lanze in der Behälterwechselposition befindet, die Lanze in dieser Position so lange gesperrt ist, bis sich ein neuer Entnahmebehälter in der Entnahmeposition befindet. Das Sperren bzw. Freigeben des Verfahrens kann programmtechnisch dergestalt erfolgen, dass ein Antrieb der Sauglanze nur freigegeben ist, wenn sich ein Entnahmebehälter in der Entnahmeposition befindet. Zusätzlich oder alternativ kann eine mechanische Verriegelung der Sauglanze in der Behälterwechselposition vorgesehen sein, die wiederum programmgesteuert beispielsweise durch einen Magneten (insbesondere Hubmagneten) oder Elektromotor betätigbar sein kann. Geeignete Sensoren können feststellen, ob ein zugeordneter Entnahmebehälter die Entnahmeposition einnimmt. Geeignete Sensoren können mechanische Sensoren (beispielsweise Taster, Gewichtssensoren oder dergleichen) optische oder funktechnische Sensoren (beispielsweise RFID-Sensoren) umfassen.

Zum mechanischen Verfahren kann jede Sauglanze einen Motorantrieb aufweisen, der als Linearantrieb ausgebildet sein kann.

In einer bevorzugten Ausführungsform weist jede Positionierungseinrichtung einen Schubteil bzw. eine Schublade auf, der den zugehörigen Entnahmebehälter aufnimmt und der von einer Wechselposition für den Entnahmebehälter in eine Entnahmeposition in der Dosiervorrichtung verschiebbar ist. Das Verschieben kann erfindungsgemäß manuell oder mechanisch/motorisch erfolgen. Der Schubteil erlaubt ein einfaches und sicheres Handhaben der Entnahmebehälter im Zuge des Behälterwechsels und stellt durch definierte Endpositionen sicher, dass nach dem Einschieben der Entnahmebehälter die entsprechende Entnahmeposition eingenommen wird.

Bevorzugt ist der Schubteil in der Entnahmeposition verriegelt, wenn sich die zugehörige Sauglanze in der Flüssigkeitsentnahmeposition oder im Verfahrbetrieb befindet. Dies verhindert, dass es durch ein versehentliches Verschieben des Schubteils zu Beschädigungen an Sauglanze, Entnahmebehälter oder Dosiervorrichtung kommt und dass Verunreinigungen durch Verschütten von Flüssigkeit auftreten. Der Schubteil ist verschiebbar, wenn sich die zugehörige Sauglanze in der Behälterwechselposition befindet.

Erfindungsgemäß kann die Verriegelung des Schubteils mittels eines Hubmagneten erfolgen. Mittels dieses Magneten kann beispielsweise ein Eingriff zwischen einem magnetbetätigten Riegel und einem zugehörigen Beschlag oder einer Ausnehmung, Bohrung oder dergleichen hergestellt bzw. gelöst werden. Der Eingriff kann insbesondere einen Formschluss umfassen.

Die erfindungsgemäße Dosiervorrichtung kann zusätzlich eine Produkterkennung zur Identifikation von in einer Entnahmeposition befindlichen Entnahmebehältern und/oder deren Inhalts und/oder sonstigen Eigenschaften oder Merkmalen des Produkts aufweisen. Eine solche Produkterkennung kann beispielsweise erfolgen durch Erfassen von Form, Größe oder sonstigen äußeren Merkmalen eines Behälters, durch optische Erkennung eines Etiketts oder Codes, durch Erfassen eines RFID-Tags oder dergleichen. Dementsprechend werden für die Produkterkennung bevorzugt Sensoren ausgewählt aus der Gruppe optische Sensoren, elektromagnetische Sensoren und/oder mechanische Sensoren. Bevorzugt umfasst die Produkterkennung eine RFID-Schreib/Leseeinheit und/oder RFID-Leseeinheit.

Die Produkterkennung ist bevorzugt ausgebildet zur Erkennung wenigstens eines Produktmerkmals ausgewählt aus der Gruppe bestehend aus Produkttyp, Gebindegröße, Chargennummer und Haltbarkeitsdatum.

In einer bevorzugten Ausgestaltung ist vorgesehen, dass die Dosiervorrichtung zusätzlich eine Schnittstelle aufweist, mittels der externe Daten an die Produkterkennung übermittelt werden können. Dies erlaubt es, der Produkterkennung Daten zur Verfügung zu stellen, die zur Identifikation geeigneter Produkte herangezogen werden. Werden beispielsweise im Zuge der Veränderungen eines Prozesses neue und/oder geänderte Prozesschemikalien eingesetzt, können mittels der Schnittstelle entsprechende Daten an die Produkterkennung übermittelt werden, so dass Entnahmebehälter mit diesen neuen Prozesschemikalien identifiziert und erkannt werden können.

In einer bevorzugten Ausführungsform ist vorgesehen, dass das Verfahren jeder Sauglanze von der Behälterwechselposition in die Flüssigkeitsentnahmeposition nur freigegeben ist, wenn ein zugeordneter Entnahmebehälter in der Dosiervorrichtung die Entnahmeposition einnimmt und zusätzlich die Produkterkennung ein Freigabesignal gibt. Damit wird verhindert, dass Fehlzuordnungen von Behältern erfolgen, beispielsweise ein Behälter mit Reinigungsmittel in eine Entnahmeposition für Desinfektionsmittel positioniert wird und/oder umgekehrt. Diese doppelte Sicherung durch Detektion der Einnahme der Entnahmeposition einerseits und der Produkterkennung andererseits erhöht insbesondere die Sicherheit beispielsweise bei validierten Prozessen wie der Reinigung/Desinfektion von Medizinprodukten und verhindert eine Verunreinigung und/oder Beschädigung der Dosiervorrichtung durch möglicherweise inkompatible Prozessflüssigkeiten. Erfindungsgemäß kann vorgesehen sein, dass die Detektion des Behälters in der Entnahmeposition und die Produkterkennung durch den gleichen Sensor erfolgen, beispielsweise einen optischen Sensor, der zum einen den Behälter detektiert und zum anderen ein Etikett ausliest und/oder eine RFID-Lesevorrichtung.

Das genannte zusätzliche Freigabesignal wird bevorzugt ermittelt anhand Daten ausgewählt aus der Gruppe bestehend aus Produkttyp, Gebindegröße, Chargennummer, Haltbarkeitsdatum, sonstigen Eigenschaften oder Merkmalen des Produkts, und mittels der Schnittstelle an die Produkterkennung übermittelten externen Daten.

Bei einer bevorzugten Ausführungsform der Dosiervorrichtung weist jede Sauglanze ein Fußventil auf. Das Fußventil verschließt die Saugöffnungen der Lanze beim Herausheben aus dem Entnahmebehälter und verhindert somit ein Vertropfen von Flüssigkeit.

Bevorzugt weist jede Sauglanze eine Kupplungseinrichtung zur Kupplung mit der zugehörigen Entnahmeleitung der Dosiervorrichtung auf.

Ein Ausführungsbeispiel der Erfindung wird nachfolgend anhand der Zeichnung erläutert. Darin zeigen:
Fig.1: schematisch einen Teil einer erfindungsgemäßen dosiert Vorrichtung mit einem Entnahmebehälter in der Entnahmeposition und der zugehörigen Sauglanze in der Flüssigkeitsentnahmeposition;
Fig.2: schematisch einen Teil einer erfindungsgemäßen dosiert Vorrichtung mit einem Entnahmebehälter in der Entnahmeposition und der zugehörigen Sauglanze in der Behälterwechselposition;
Fig.3: schematisch einen Teil einer erfindungsgemäßen dosiert Vorrichtung mit einem Entnahmebehälter in der Wechselposition für diesen Behälter und der zugehörigen Sauglanze in der Behälterwechselposition.

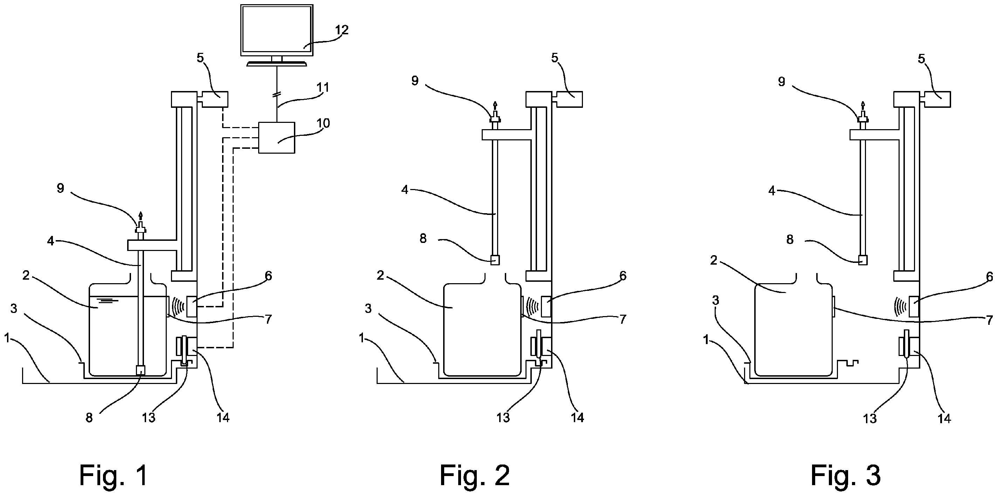

Fig.1 zeigt eine insgesamt mit 1 bezeichnete erfindungsgemäße Dosiervorrichtung schematisch in einem Ausschnitt, der lediglich einen der wenigstens zwei vorhandenen Entnahmebehälter zeigt.

Ein Entnahmebehälter 2 befindet sich in einem Schubteil 3. Das Schubteil mit dem darin befindlichen Entnahmebehälter nimmt in Fig.1 die Entnahmestellung ein, in der mittels der Sauglanze 4 Flüssigkeit aus dem Entnahmebehälter 2 entnommen werden kann. Die Sauglanze 2 weist ein Fußventil 8 an der Saugöffnungen und eine Kupplungseinrichtung 9 zur Verbindung mit einer nicht dargestellten Entnahmeleitung der Dosiervorrichtung auf. Ein Motorantrieb 5 dient zum Verfahren der Sauglanze 4.

Der Schubteil 3 ist bei 13/14 mechanisch verriegelt und kann nicht in die Behälterwechselposition verschoben werden. Er weist zu diesem Zweck eine als Ausnehmung 13 ausgebildete Verriegelung auf, in die ein Riegel eines Hubmagneten 14 eingreift.

Der Entnahmebehälter 2 weist einen RFID-Tag 7 auf, in dem Produktinformationen gespeichert sind. Eine RFID-Leseeinrichtung 6 kann die Anwesenheit des Behälters feststellen und die Produktinformationen auslesen.

Motorantrieb 5, RFID-Leseeinrichtung 6 und Hubmagnet 14 sind mittels gestrichelt dargestellter Datenverbindungen über eine Schnittstelle 10 und eine Datenverbindung 11 mit einer Datenverarbeitungsanlage 12 verbunden. Die genannten Datenverbindungen können kabelgebundene oder kabellos sein und einschlägige Netzwerktechnologien wie LAN, WLAN, Bluetooth, das Internet oder dergleichen nutzen.

In Fig. 1 befindet sich ein Entnahmebehälter 2 auf einem Schubteil 3 in der Entnahmeposition der Dosiervorrichtung. Eine Sauglanze 4 ermöglicht die Entnahme von Flüssigkeit. Das Fußventil 8 der Sauglanze befindet sich im Bereich der tiefsten Stelle des Entnahmebehälters 2, so dass eine weitgehend vollständige Entleerung möglich ist. An die Kupplungseinrichtung 9 der Sauglanze 4 ist eine in der Zeichnung nicht dargestellt Entnahmeleitung der Dosiervorrichtung angeschlossen. Der Schubteil 3 weist eine Ausnehmung oder Verriegelung 13 auf, in die ein Riegel eines Hubmagneten 14 eingreift. Der Schubteil 3 ist dadurch gegen Verschieben bzw. Herausziehen gesichert, der Entnahmebehälter 2 damit in der Entnahmeposition fixiert.

Der Entnahmebehälter 2 weist einen RFID-Tag 7 auf, auf dem Produktmerkmale gespeichert sind. Im Ausführungsbeispiel gehören dazu Typ und Gebindegröße des Entnahmebehälters, die Produktidentifikation, Chargennummer und Haltbarkeitsdatum des Produkts. Die Dosiervorrichtung weist ein zugeordnetes RFID-Lesegerät 6 auf, mittels dem sich die auf dem RFID-Tag 7 gespeicherten Daten auslesen lassen.

Wird ein neuer Entnahmebehälter 2 in die gezeigte Entnahmeposition gebracht, befindet sich die zugehörige Sauglanze 4 zunächst in der in Fig. 2 dargestellten Behälterwechselposition. Die RFID-Leseeinrichtung 6 liest die auf dem RFID-Tag 7 gespeicherten Daten aus und übermittelt diese über die Schnittstelle 10 und die Datenleitung 11 an die Datenverarbeitungsanlage 12. Die Datenverarbeitungsanlage stellt auf diese Art und Weise die Anwesenheit eines Entnahmebehälters 2 in der Entnahmeposition fest und verifiziert, dass darin ein zu der Entnahmeposition passendes Produkt enthalten ist. Erst danach steuert die Datenverarbeitungsanlage 12 über die Schnittstelle 10 den Motorantrieb 5 an zum Verfahren der Sauglanze 4 aus der Behälterwechselposition in die in Fig. 1 dargestellte Entnahmeposition. Anschließend beginnt der reguläre Entnahmebetrieb der Dosiervorrichtung.

Ist der Entnahmebehälter 2 vollständig oder zumindest weitgehend entleert, kann dies mittels geeigneter, in der Zeichnung nicht dargestellter Sensoren festgestellt werden. Entsprechende Sensoren können beispielsweise das Gewicht des Entnahmebehälters 2, die Höhe des darin befindlichen Flüssigkeitsspiegels oder das Trockenlaufen der Ansaugung im Bereich des Fußventils 8 feststellen. Sobald der Sensor die Sensoren den Leerzustand festgestellt haben, wird die Sauglanze 4 mittels des Motorantriebs 5 in die in Fig. 2 dargestellte Behälterwechselposition verfahren. Das Fußventil 8 verhindert dabei ein Nachtropfen von Restflüssigkeit aus der Sauglanze 4. Anschließend gibt der Hubmagnet 14 die Verriegelung 13 frei, so dass der Schubteil 3 verschoben bzw. herausgezogen werden kann in die in Fig. 3 schematisch dargestellte Wechselposition für den Entnahmebehälter 2.

Nach dem Wechsel des Entnahmebehälters 2 wird der Schubteil 3 zurück in die Entnahmeposition verschoben und der beschriebene Zyklus beginnt von neuem.

### Bezugszeichenliste

- (1): Dosiervorrichtung
- (2): Entnahmebehälter
- (3): Positionierungseinrichtung (Schubteil)
- (4): Sauglanze
- (5): Motorantrieb
- (6): RFID-Lesegerät/Sensor
- (7): RFID-Tag
- (8): Fußventil
- (9): Kupplungseinrichtung
- (10): Schnittstelle
- (11): Datenverbindung
- (12): Datenverarbeitungsanlage
- (13): Verriegelung
- (14): Hubmagnet

## Patentansprüche

1. Dosiervorrichtung zum Dosieren von wenigstens zwei flüssigen Prozesschemikalien aus wenigstens zwei wechselbaren Entnahmebehältern (2), mit
einer Positionierungseinrichtung (3) für jeden Entnahmebehälter (2), mittels der der Entnahmebehälter (2) eine Entnahmeposition in der Dosiervorrichtung einnimmt, und
je einer jedem Entnahmebehälter (2) zugeordneten Sauglanze (4) zur Entnahme von flüssigen Prozesschemikalien,
**dadurch gekennzeichnet, dass**
jede Sauglanze (4) mechanisch automatisiert von einer Behälterwechselposition in eine Flüssigkeitsentnahmeposition und umgekehrt verfahrbar ist, und
dass das Verfahren von der Behälterwechselposition in die Flüssigkeitsentnahmeposition nur freigegeben ist, wenn ein zugeordneter Entnahmebehälter (2) in der Dosiervorrichtung die Entnahmeposition einnimmt.

2. Dosiervorrichtung nach Anspruch 1, **dadurch gekennzeichnet, dass** jede Sauglanze (4) einen Motorantrieb (5), bevorzugt einen Linearantrieb aufweist.

3. Dosiervorrichtung nach Anspruch 1 oder 2, **dadurch gekennzeichnet, dass** jede Positionierungseinrichtung einen Schubteil (3) aufweist, der den zugehörigen Entnahmebehälter (2) aufnimmt und der von einer Wechselposition für den Entnahmebehälter in eine Entnahmeposition in der Dosiervorrichtung verschiebbar ist.

4. Dosiervorrichtung nach Anspruch 3, **dadurch gekennzeichnet, dass** der Schubteil (3) in der Entnahmeposition verriegelt ist, wenn sich die zugehörige Sauglanze (4) in der Flüssigkeitsentnahmeposition oder im Verfahrbetrieb befindet, und dass der Schubteil (3) verschiebbar ist, wenn sich die zugehörige Sauglanze (4) in der Behälterwechselposition befindet.

5. Dosiervorrichtung nach Anspruch 4, **dadurch gekennzeichnet, dass** die Verriegelung des Schubteils (3) mittels eines Hubmagneten (14) erfolgt.

6. Dosiervorrichtung nach einem der Ansprüche 1 bis 5,
**dadurch gekennzeichnet, dass** sie eine Produkterkennung zur Identifikation von in einer Entnahmeposition befindlichen Entnahmebehältern und/oder deren Inhalts und/oder sonstigen Eigenschaften oder Merkmalen des Produkts aufweist.

7. Dosiervorrichtung nach Anspruch 6, **dadurch gekennzeichnet, dass** die Produkterkennung Sensoren ausgewählt aus der Gruppe optische Sensoren, elektromagnetische Sensoren und/oder mechanische Sensoren aufweist.

8. Dosiervorrichtung nach Anspruch 7, **dadurch gekennzeichnet, dass** die Produkterkennung eine RFID-Schreib/Leseeinheit und/oder RFID-Leseeinheit (6) aufweist.

9. Dosiervorrichtung nach einem der Ansprüche 6 bis 8,
**dadurch gekennzeichnet, dass** die Produkterkennung ausgebildet ist zur Erkennung wenigstens eines Produktmerkmals ausgewählt aus der Gruppe bestehend aus Produkttyp, Gebindegröße, Chargennummer und Haltbarkeitsdatum.

10. Dosiervorrichtung nach einem der Ansprüche 6 bis 9,
**dadurch gekennzeichnet, dass** sie zusätzlich eine Schnittstelle (10) aufweist, mittels der externe Daten an die Produkterkennung übermittelt werden können.

11. Dosiervorrichtung nach einem der Ansprüche 6 bis 10,
**dadurch gekennzeichnet, dass** das Verfahren jeder Sauglanze (4) von der Behälterwechselposition in die Flüssigkeitsentnahmeposition nur freigegeben ist, wenn ein zugeordneter Entnahmebehälter (2) in der Dosiervorrichtung die Entnahmeposition einnimmt und zusätzlich die Produkterkennung ein Freigabesignal gibt.

12. Dosiervorrichtung nach Anspruch 11, **dadurch gekennzeichnet, dass** das Freigabesignal ermittelt wird anhand Daten ausgewählt aus der Gruppe bestehend aus Produkttyp, Gebindegröße, Chargennummer, Haltbarkeitsdatum, sonstigen Eigenschaften oder Merkmalen des Produkts, und mittels der Schnittstelle (10) an die Produkterkennung übermittelten externen Daten.

13. Dosiervorrichtung nach einem der Ansprüche 1 bis 12,
**dadurch gekennzeichnet, dass** jede Sauglanze (4) ein Fußventil (8) aufweist.

14. Dosiervorrichtung nach einem der Ansprüche 1 bis 13,
**dadurch gekennzeichnet, dass** jede Sauglanze (4) eine Kupplungseinrichtung (9) zur Kupplung mit der zugehörigen Entnahmeleitung der Dosiervorrichtung aufweist.
